# EUROPEAN PATENT APPLICATION

(11) **EP 4 579 891 A1**
(43) Date of publication of application: **02.07.2025**
(21) Application number: 23875034.3
(22) Date of filing: 07.08.2023
(51) Int. Cl.: H01M 50/105, H01M 50/186, B29C 65/00, B29L 31/00

(54) **SECONDARY BATTERY, MANUFACTURING METHOD FOR SAME SECONDARY BATTERY, AND PRESSING DEVICE USED FOR SAME MANUFACTURING METHOD**

(30) Priority: 05.10.2022 KR 20220127431; 10.05.2023 KR 20230060696
(71) Applicant: LG Energy Solution, Ltd., Seoul 07335 (KR)
(72) Inventor: CHO, Woo Yong, Daejeon 34122 (KR)
(74) Representative: Goddar, Heinz J.
(86) International application number: PCT/KR2023/011615
(87) International publication number: WO 2024/075964

(57) **Abstract**

An embodiment of the present invention relates to a method for manufacturing a secondary battery that includes an electrode assembly and a battery case provided to accommodate the electrode assembly and having a sealed edge, and the method may include a folding process of folding the edge, an attaching process of attaching an adhesive member to the folded edge, and a pressing process of pressing at least a partial area of a non-attachment area, to which the adhesive member is not attached, of the edge.

## Description

### TECHNICAL FIELD

### CROSS-REFERENCE TO RELATED APPLICATION

The present application claims the benefit of the priority of Korean Patent Application Nos. 10-2022-0127431, filed on October 5, 2022, and 10-2023-0060696, filed on May 10, 2023, which are hereby incorporated by reference in their entirety.

### TECHNICAL FIELD

The present invention relates to a secondary battery, a method for manufacturing the secondary battery, and a pressing apparatus used for the method.

### BACKGROUND ART

Research on and development for electric power generation based on eco-friendly energy sources are carried out so as to solve the problems of the environmental pollution and solve the energy source problems caused by depletion of oil resources. In particular, research on secondary batteries is actively carried out, and the research is conducted on various aspects such as the materials, structures, processes, and stability of the secondary batteries.

With regard to the structure of the secondary batteries, the secondary batteries may be classified into a pouch type, a prismatic type, a cylindrical type, and the like, according to the shape of battery cases for accommodating electrode assemblies. In the pouch type secondary batteries, a sealing part or degassing part formed on an edge occupies a space, and thus a double side folding (DSF) process of folding the sealing part or the degassing part may be performed for spatial efficiency.

According to the related art, folding is followed by taping when performing the DSF process. Here, taping the entire surface of the edge is disadvantageous in the aspects of lead part flame propagation retardation. In addition, partially taping the edge may cause a difference in thickness between a non-attachment area, to which a tape is not attached, and a partially taped area, and the difference in thickness may be likely to cause a physical interference in a subsequent process.

### DISCLOSURE OF THE INVENTION

### TECHNICAL PROBLEM

An object of the present invention for solving the above problems is to provide a secondary battery capable of minimizing a difference in thickness between a non-attachment area to which a tape is not attached, and an area to which a tape is attached, so as to prevent a physical interference, a method for manufacturing the secondary battery, and a pressing apparatus used for the method.

### TECHNICAL SOLUTION

A method for manufacturing a secondary battery according to an embodiment of the present invention may manufacture the secondary battery including an electrode assembly, and a battery case provided to accommodate the electrode assembly and having a sealed edge. The method for manufacturing the secondary battery may include a folding process of folding the edge, an attaching process of attaching an adhesive member to the folded edge, and a pressing process of pressing at least a partial area of a non-attachment area, to which the adhesive member is not attached, of the edge.

A pressing apparatus according to an embodiment of the present invention may press a secondary battery including an electrode assembly, and a battery case provided to accommodate the electrode assembly and having a sealed edge, wherein an adhesive member is attached to a partial area of the edge. The pressing apparatus may include a body provided so that a distance from the edge varies, and a protrusion protruding from the body toward the edge so as to press at least a portion of a remaining area except for the partial area.

A secondary battery according to an embodiment of the present invention may include an electrode assembly, a battery case provided to accommodate the electrode assembly and having a folded edge, and an adhesive member attached to a partial area of the folded edge, wherein at least a partial area of a non-attachment area, to which the adhesive member is not attached, of the edge is pressed.

### ADVANTAGEOUS EFFECTS

According to the preferred embodiment of the present invention, the difference in thickness between the areas of the secondary battery may be minimized.

According to the preferred embodiment of the present invention, the edge of the secondary battery may be prevented from unnecessarily protruding.

According to the preferred embodiment of the present invention, the occurrence of the physical interference caused by the protruding and the difference in thickness between the areas of the secondary battery may be minimized.

According to the preferred embodiment of the present invention, the spatial efficiency may be improved when the secondary batteries are stacked.

### BRIEF DESCRIPTION OF THE DRAWINGS

FIG. 1 is an assembly view illustrating a secondary battery according to an embodiment of the present invention.
FIG. 2 is a flowchart illustrating a method for manufacturing a secondary battery according to an embodiment of the present invention.
FIG. 3 is a longitudinal cross-sectional view illustrating a secondary battery according to an embodiment of the present invention when viewed in one direction.
FIG. 4a is a plan view illustrating a non-attachment area of a secondary battery according to an embodiment of the present invention.
FIG. 4b is a perspective view illustrating a non-attachment area of a secondary battery according to an embodiment of the present invention.
FIG. 5 is a side view illustrating a state in which a non-attachment area of a secondary battery is pressed using a pressing apparatus according to a first embodiment of the present invention when viewed in another direction.
FIG. 6 is a plan view illustrating a pressing area on which the pressing apparatus presses the secondary battery according to the first embodiment of the present invention.
FIG. 7 is a side view illustrating a state in which a non-attachment area of a secondary battery is pressed using a pressing apparatus according to a second embodiment of the present invention when viewed in another direction.
FIG. 8 is a plan view illustrating a pressing area on which the pressing apparatus presses the secondary battery according to the second embodiment of the present invention.
FIG. 9 is a side view illustrating a state in which a non-attachment area of a secondary battery is pressed using a pressing apparatus according to a third embodiment of the present invention when viewed in another direction.
FIG. 10 is a plan view illustrating a pressing area on which the pressing apparatus presses the secondary battery according to the third embodiment of the present invention.
FIG. 11 is a side view illustrating a state in which a non-attachment area of a secondary battery is pressed using a pressing apparatus according to a fourth embodiment of the present invention when viewed in another direction.
FIG. 12 is a plan view illustrating a pressing area on which the pressing apparatus presses the secondary battery according to the fourth embodiment of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

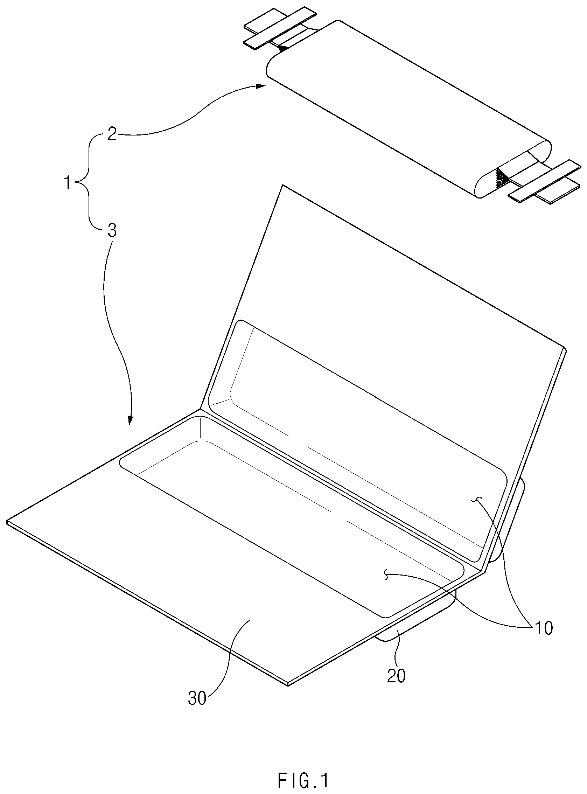

FIG. 1 is an assembly view illustrating a secondary battery 1 according to embodiments of the present invention.

The secondary battery 1 may include an electrode assembly 2. An electrode and a separator may be alternately stacked to provide the electrode assembly 2. For example, the electrode assembly 2 may be provided by alternately stacking electrodes (e.g., a positive electrode and a negative electrode) with a separator therebetween. The electrode assembly 2 may include electrode tabs, and the electrode tabs may be connected to the positive electrode and the negative electrode, respectively. The electrode assembly 2 may include an electrode lead. The electrode lead may be connected to the electrode tabs and electrically connect the electrodes to the outside. The electrode assembly 2 is not limited to those described above, and may be described in the general context of the relevant technical field.

The secondary battery 1 may include a battery case 3. The battery case 3 may accommodate the electrode assembly 2 therein. For example, the battery case 3 may be a pouch type battery case. The electrode assembly 2 may be accommodated in the battery case 3, and an edge of the battery case 3 may be sealed.

The battery case 3 may include an accommodation part 10. The accommodation part 10 may be a portion in which the electrode assembly 2 is accommodated and seated in the battery case 3. The accommodation part 10 may define an accommodation space in which the electrode assembly 2 may be accommodated.

The battery case 3 may include a cup part 20. The cup part 20 may be provided to have a shape surrounding the accommodation part 10. As the cup part 20 is provided, the accommodation part 10 may be provided.

The battery case 3 may include a degassing part 30. The degassing part 30 may be provided on a side portion of the cup part 20 and discharge a gas generated in the cup part 20 through a degassing hole.

The battery case 3 may include an edge 40. A portion of the degassing part 30 may be cut from the battery case 3 after a degassing process is performed. As the portion of the degassing part 30 is cut, the degassing part 30 may be decreased in length, and the secondary battery 1 may be reduced in volume. A remaining portion of the degassing part 30 after the portion thereof is cut may be the edge 40.

As described above, as the portion of the degassing part 30 is cut to decrease the length of the degassing part 30, the volume of the secondary battery 1 may be reduced. However, when the edge 40 is left as it is, the spatial efficiency of the secondary battery 1 may be deteriorated. Thus, the edge 40 may be preferably folded.

Hereinafter, embodiments will be described which are capable of folding the edge 40, attaching an adhesive member to the folded edge 40, and pressing at least a portion of a non-attachment area, to which the adhesive member is not attached, so that the spatial efficiency of the secondary battery 1 is stably improved.

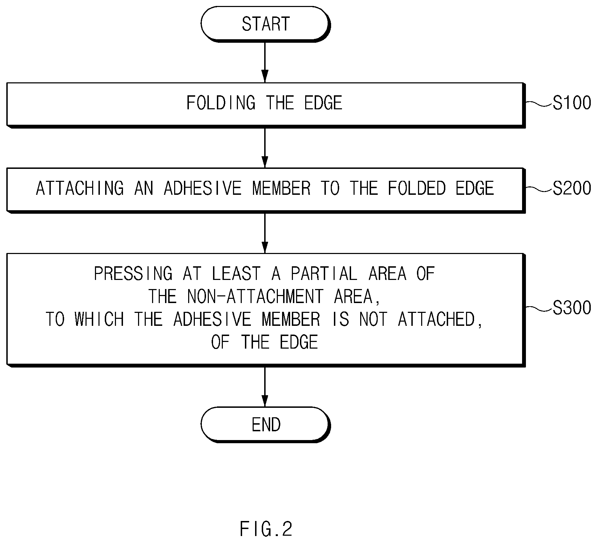

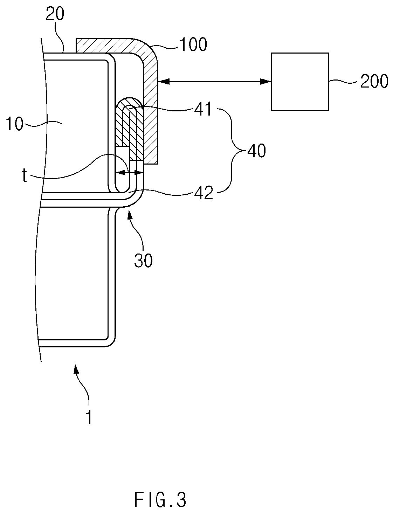

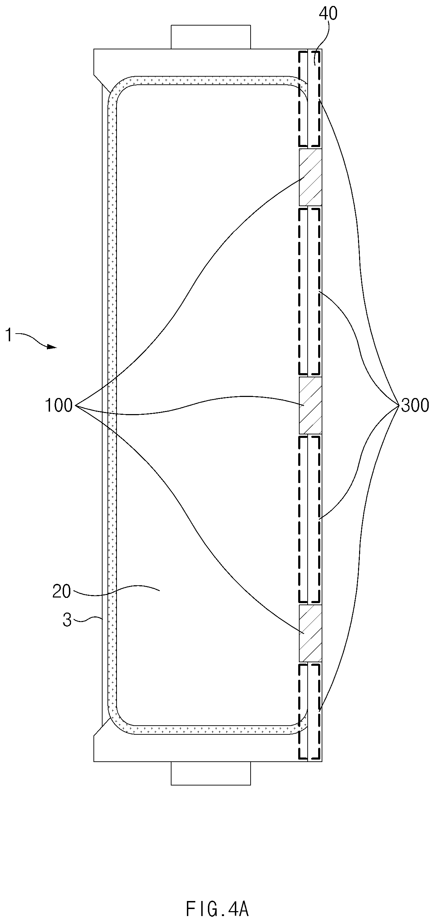

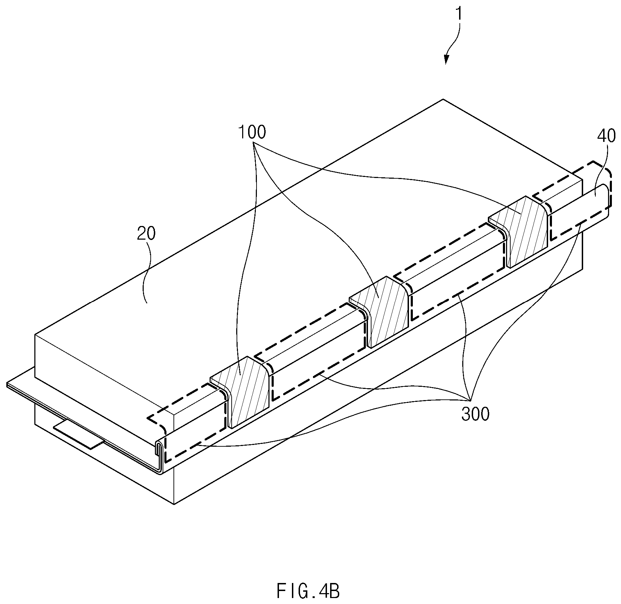

FIG. 2 is a flowchart illustrating a method for manufacturing the secondary battery 1 according to embodiments of the present invention. The method for manufacturing the secondary battery 1 in FIG. 2 will be described with reference to FIG. 3 illustrating a longitudinal cross-sectional view of the secondary battery 1 when viewed in one direction, and FIG. 4a and 4b illustrating a plan view and a perspective view of a non-attachment area 300 of the secondary battery 1. The same or similar description as or to the foregoing description may also apply to this embodiment.

The method for manufacturing the secondary battery 1 may include a folding process of folding the edge 40 according to S100.

The edge 40 may be folded multiple times. For example, the edge 40 may be folded twice using a double side folding (DSF) process. Specifically, the edge 40 may include a first folding part 41 and a second folding part 42. The first folding part 41 is a portion folded at a position that is relatively closer to an end of the edge 40, and the second folding part 42 is a portion folded at a position that is relatively closer to the cup part 20. The edge 40 may be primarily folded on the basis of the first folding part 41, and then the edge 40 may be secondarily folded on the basis of the second folding part 42.

The method for manufacturing the secondary battery 1 may include an attaching process of attaching an adhesive member 100 to the folded edge 40 according to S200.

The adhesive member 100 may be attached to the secondary battery 1 through the attaching process. For example, the adhesive member 100 may be attached while covering a portion of the edge 40 and a portion of the cup part 20. The adhesive member 100 may be attached to the edge 40 so that the edge 40 is fixed in a state of being folded toward the cup part 20.

The attaching process may include attaching a plurality of adhesive members 100 to the edge 40 so as to be spaced apart from each other. For example, the adhesive member 100 may be provided in plurality, and the plurality of adhesive members 100 may be attached at intervals along the edge 40. For specific example, the adhesive member 100 may be provided in three, and the three adhesive members 100 may be attached at intervals along the edge 40. However, the number of the adhesive members 100 is not limited to the foregoing example.

In the attaching process, the non-attachment area 300 may be formed. For example, when the plurality of adhesive members 100 are attached to the edge 40 so as to be spaced apart from each other, the non-attachment area 300 to which the adhesive member 100 is not attached may be formed between the plurality of adhesive members 100.

Referring to FIG. 4a, the non-attachment area 300 may be formed on a portion of the cup part 20. For example, the non-attachment area 300 may be formed on an upper portion of the cup part 20 of the secondary battery 1. In addition, referring to FIG. 4b, the non-attachment area 300 may be formed on a portion of the edge 40. For example, the non-attachment area 300 may be formed on a portion of a side portion of the edge 40.

The following descriptions of a thickness t of the non-attachment area 300 may correspond to descriptions of a thickness of the edge 40.

The thickness t of the non-attachment area 300 (or the edge 40 corresponding to the non-attachment area 300) before a pressing process for the non-attachment area 300 may be greater than a thickness of an attachment area to which the adhesive member 100 is attached. The thickness t may be a thickness t of the edge 40 in a state in which the edge 40 is folded multiple times. The thickness t of the edge 40 may be a thickness in a lateral direction. Hereinafter, a thickness may be the thickness t of the non-attachment area 300.

The attaching process may include attaching an adhesive member having a melting point higher than a temperature exceeding room temperature.

The method for manufacturing the secondary battery 1 may include a pressing process of pressing at least a partial area of the non-attachment area 300, to which the adhesive member 100 is not attached, of the edge 40 according to S300.

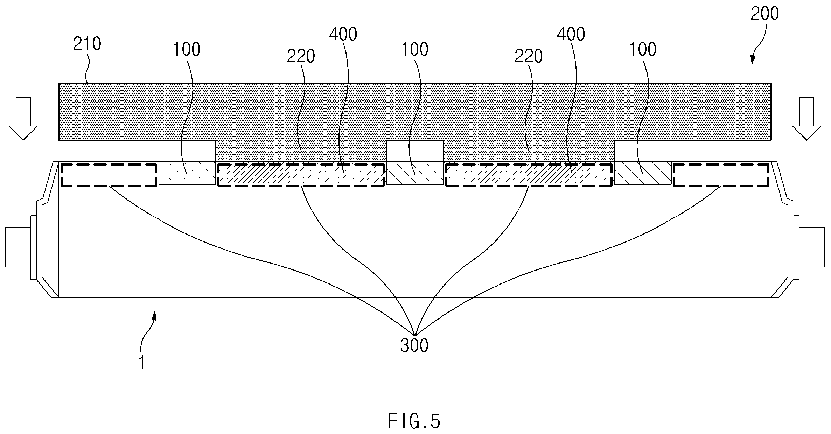

The pressing process may include pressing a portion of the secondary battery 1 by using a pressing apparatus 200. The pressing apparatus 200 may be movable relative to the secondary battery 1. The pressing apparatus 200 may include a protruding portion (e.g., a protrusion 220 in FIG. 5) so as to press at least a portion of the non-attachment area 300 of the secondary battery 1.

The pressing process may include pressing a portion of the secondary battery 1 by using the pressing apparatus 200 in a direction in which the thickness t of the portion of the secondary battery 1 decreases. For example, the pressing apparatus 200 may press the portion of the secondary battery 1 in a direction facing the cup part 120. In other words, the pressing apparatus 200 may press the non-attachment area 300 of the edge 40 from a lateral side of the edge 40 of the secondary battery 1.

The pressing process may include pressing at least a partial area of the non-attachment area 300 formed between the plurality of adhesive members 100 by using the pressing apparatus 200.

The pressing process may include pressing the at least a partial area with a gap from the attachment area, to which the adhesive member 100 is attached, by using the pressing apparatus 200.

The pressing process may include pressing the at least a partial area at a temperature exceeding room temperature by using the pressing apparatus 200.

The thickness t of the non-attachment area 300 (or the edge 40 corresponding to the non-attachment area 300) after the pressing process may not be greater than the thickness of the attachment area to which the adhesive member 100 is attached. For example, the pressing may be performed by using the pressing apparatus 200 in a direction in which the thickness t decreases, so that the thickness t of the non-attachment area 300 corresponds to the thickness of the attachment area, to which the adhesive member 100 is attached, or is less than the thickness of the attachment area to which the adhesive member 100 is attached.

The corresponding thickness may include the same thickness, and, even though not the same, also include a thickness of a portion protruding to the outside within a small range.

In other words, the non-attachment area 300 after the pressing process may not protrude outward from the attachment area to which the adhesive member 100 is attached. Accordingly, a partial area (e.g., non-attachment area 300) of the edge 40 of the secondary battery may be prevented from unnecessarily protruding.

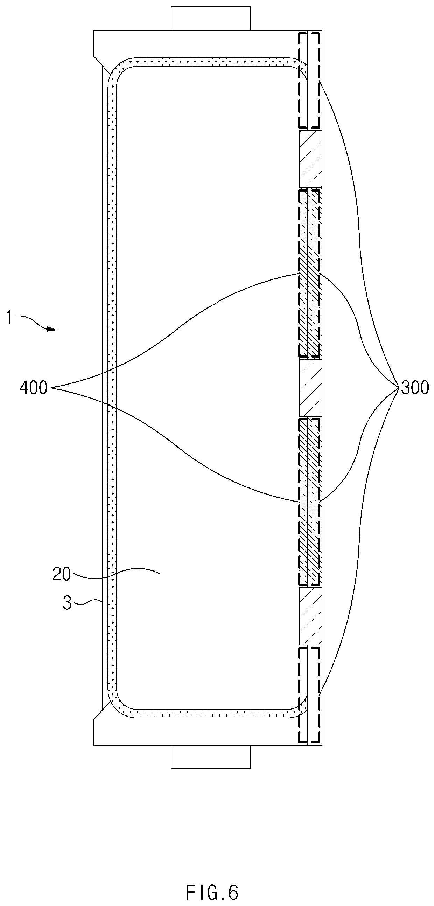

FIG. 5 is a side view illustrating a state in which a non-attachment area 300 of a secondary battery 1 is pressed using a pressing apparatus 200 according to a first embodiment of the present invention when viewed in another direction. FIG. 6 is a plan view illustrating a pressing area 400 on which the pressing apparatus 200 presses the secondary battery 1 according to the first embodiment of the present invention. The same or similar description as or to the foregoing description may also apply to this embodiment.

Referring to FIG. 5 and the plan view in FIG. 6, the pressing apparatus 200 may press the non-attachment area 300 at a side of an edge 40 in a direction in which a thickness t of the non-attachment area 300 is decreased in a lateral direction of the secondary battery 1.

The pressing apparatus 200 may press the secondary battery 1. The secondary battery 1 may include an electrode assembly 2, and a battery case 3 provided to accommodate the electrode assembly 2 and having a sealed edge. An adhesive member 100 may be attached to a partial area of the edge 40.

The pressing apparatus 200 may include a body 210. For example, the body 210 may be provided so that a distance from the edge 40 varies. In other words, the body 210 may be movable relative to the edge 40.

The pressing apparatus 200 may include the protrusion 220. For example, the protrusion 220 may protrude from the body 210 toward the edge 40 so as to press at least a portion of a remaining area (or non-attachment area 300) except a partial area (or attachment area) to which the adhesive member 100 is attached. The protrusion 220 may protrude from the body 210 to form a predetermined pattern. For example, the predetermined pattern may be determined according to a pressing area (e.g., pressing area 400), which is pressed by the protrusion 220, of the non-attachment area 300.

The pressing apparatus 200 may be provided to be capable of being heated. For example, the protrusion 220, which is provided so as to press at least a portion of the non-attachment area 300, may be provided to be heated to at least a temperature exceeding room temperature.

The protrusion 220 of the pressing apparatus 200 may protrude to form a pattern provided so that an area, which is disposed between the adhesive members 100, of the non-attachment area 300 is at least pressed. For example, the protrusion 220 may protrude to form a pattern as in FIG. 5, so that an area (or pressing area 400), which is disposed between the adhesive members 100, of the non-attachment area 300 of the edge 40 is mainly pressed. Specifically, the protrusion 220 may protrude to formed a pattern provided so as to press the area between the adhesive members 100.

The area (or pressing area 400) between the adhesive members 100 may be an area in which a difference in thickness between the non-attachment area 300 and the attachment area to which the adhesive member 100 is attached is greatest. In this case, as the protrusion 220 presses the area between the adhesive members 100, a thickness of the non-attachment area 300 having the greatest thickness difference and a thickness of the attachment area, to which the adhesive member 100 is attached, may be uniform.

In the pressing apparatus 200, the pressing apparatus 200 may press the pressing area 400 in a state in which at least the protrusion 220 of the pressing apparatus 200 is heated to a temperature exceeding room temperature. When the protrusion 220 performs the pressing in the heated state, the thickness of the non-attachment area 300 having the greatest thickness difference and the thickness of the attachment area, to which the adhesive member 100 is attached, may be made uniform more effectively.

As described above, not only the thickness of the non-attachment area 300 and the thickness of the attachment area may be uniform, but also spatial efficiency may be improved even when the thickness t of the non-attachment area 300 is less than the thickness of the attachment area to which the adhesive member 100 is attached.

In the secondary battery 1 pressed by the pressing apparatus 200, a partial area of the non-attachment area 300 may be thermo-compressed. For example, at least a partial area (e.g., area between the adhesive members 100) of the non-attachment area 300, to which the adhesive members 100 are not attached, of the edge 40 may be thermo-compressed by being heated and pressed by the protrusion 220 protruding to form a predetermined pattern.

As the area, which is disposed between the adhesive members 100, of the non-attachment area 300 is thermo-compressed through the heating and the pressing, a thickness of at least an area, which is disposed between the adhesive members 100, of the non-attachment area 300, to which the adhesive member 100 is not attached, of the folded edge 40 may correspond to or be less than the thickness of the attachment area to which the adhesive member 100 is attached.

According to the foregoing description, an occurrence of a physical interference caused by the difference in thickness between the areas of the secondary battery 1 may be minimized, and spatial efficiency may be improved when the secondary batteries 1 are stacked.

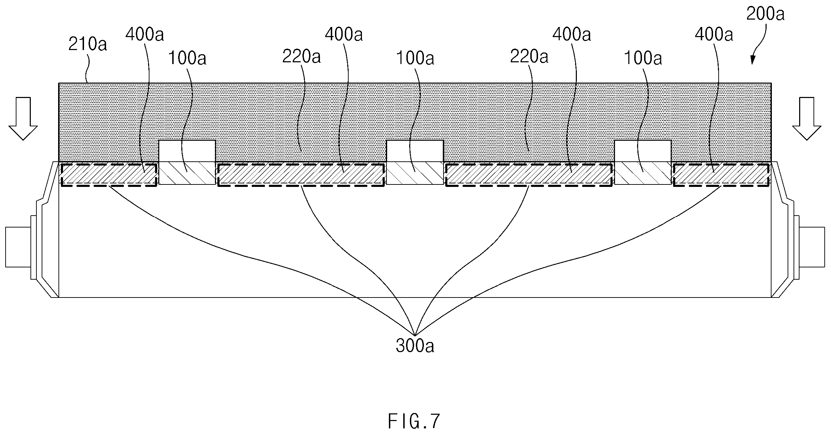

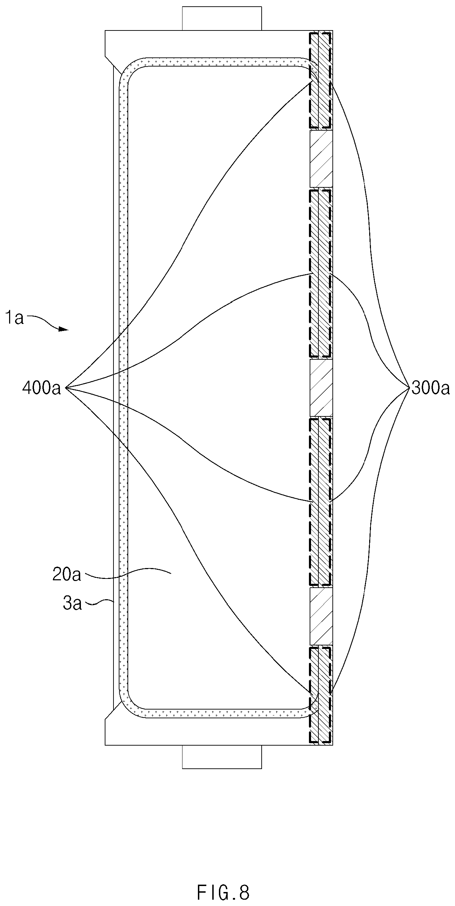

FIG. 7 is a side view illustrating a state in which a non-attachment area 300a of a secondary battery 1a is pressed using a pressing apparatus 200a according to a second embodiment of the present invention when viewed in another direction. FIG. 8 is a plan view illustrating a pressing area 400a on which the pressing apparatus 200a presses the secondary battery 1a according to the second embodiment of the present invention. The same or similar description as or to the foregoing description may also apply to this embodiment.

A protrusion 220a of the pressing apparatus 200a may protrude to form a pattern provided so that the non-attachment area 300a is at least pressed. For example, the protrusion 220a may protrude to form a pattern as in FIG. 7 so that the entirety of the non-attachment area 300a of an edge 40a is pressed. Specifically, the protrusion 220 may protrude to form a pattern corresponding to a shape of the non-attachment area 300a so that the entirety of the non-attachment area 300a is pressed. The pressing area 400a may be an area corresponding to the non-attachment area 300. As the protrusion 220a presses the pressing area 400a, a difference in thickness between the non-attachment area 300a and an attachment area to which an adhesive member 100a is attached may be minimized.

The pressing apparatus 200a may press the pressing area 400a in a state in which at least the protrusion 220a is heated. When the protrusion 220a performs the pressing in the heated state, the difference in thickness between the non-attachment area 300a and the attachment area to which the adhesive member 100a is attached may be reduced more effectively.

In the secondary battery 1a pressed by the pressing apparatus 200a, the non-attachment area 300a may be thermo-compressed. For example, the non-attachment area 300a, to which the adhesive member 100a is not attached, of the edge 40a may be thermo-compressed by being heated and pressed by the protrusion 220a protruding to form a predetermined pattern.

As the non-attachment area 300a is thermo-compressed through the heating and the pressing, the thickness of the non-attachment area 300a, to which the adhesive member 100a is not attached, of the folded edge 40a may correspond to or be less than the thickness of the attachment area to which the adhesive member 100a is attached.

According to the foregoing description, an occurrence of a physical interference caused by the difference in thickness between the areas of the secondary battery 1a may be minimized, and spatial efficiency may be improved when the secondary batteries 1a are stacked.

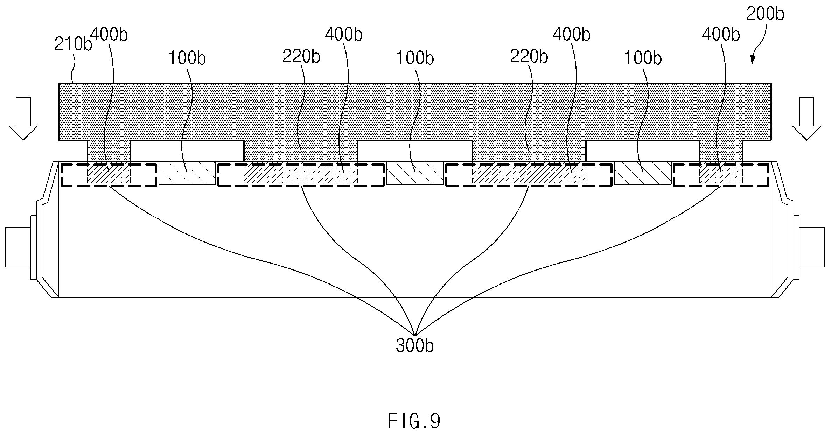

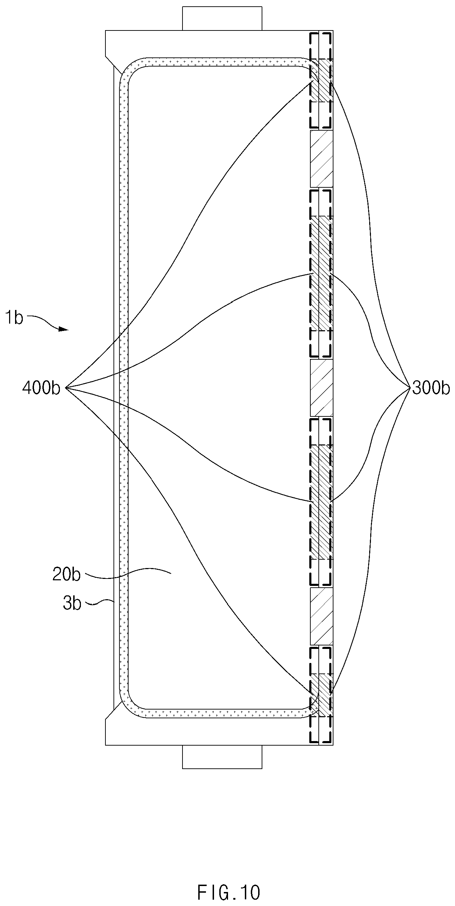

FIG. 9 is a side view illustrating a state in which a non-attachment area 300b of a secondary battery 1b is pressed using a pressing apparatus 200b according to a third embodiment of the present invention when viewed in another direction. FIG. 10 is a plan view illustrating a pressing area 400b on which the pressing apparatus 200b presses the secondary battery 1a according to the third embodiment of the present invention. The same or similar description as or to the foregoing description may also apply to this embodiment.

As described above, a pressing process including pressing at least a partial area of the non-attachment area 300b with a gap from an attachment area to which an adhesive member 100b is attached will be described.

A protrusion 220b of the pressing apparatus 200b may protrude to form a pattern provided so that the non-attachment area 300b is at least pressed, and is pressed with a gap from the attachment area to which the adhesive member 100b is attached. For example, the protrusion 220b may protrude to form a pattern as in FIG. 9 so that a portion of the non-attachment area 300b of an edge 40b is pressed. Specifically, the protrusion 220b may protrude to form a pattern provided so that a portion of the non-attachment area 300b is pressed, and a portion, which is adjacent to the adhesive member 100b, of the non-attachment area 300b is not pressed. The pressing area 400b may be an area included in the non-attachment area 300b. As the protrusion 220b presses the pressing area 400b, a difference in thickness between the pressing area 400b of the non-attachment area 300b and the attachment area to which the adhesive member 100a is attached may be minimized.

The pressing apparatus 200b may press the pressing area 400b in a state in which at least the protrusion 220b is heated. When the protrusion 220b performs the pressing in the heated state, the difference in thickness between the pressing area 400b of the non-attachment area 300b and the attachment area to which the adhesive member 100b is attached may be reduced more effectively.

In the secondary battery 1b pressed by the pressing apparatus 200b, the pressing area 400b of the non-attachment area 300b may be thermo-compressed. For example, the non-attachment area 300b, to which the adhesive member 100b is not attached, of the edge 40b may be thermo-compressed, and an area, which corresponds to the pressing area 400b, of the non-attachment area 300b may be thermo-compressed by being heated and pressed by the protrusion 220b protruding to form a predetermined pattern.

As the pressing area 400b is thermo-compressed through the heating and the pressing, a thickness of the pressing area 400b of the folded edge 40b may correspond to or be less than a thickness of the attachment area to which the adhesive member 100 is attached.

According to the foregoing description, an occurrence of a physical interference caused by the difference in thickness between the areas of the secondary battery 1b may be minimized, and spatial efficiency may be improved when the secondary batteries 1b are stacked.

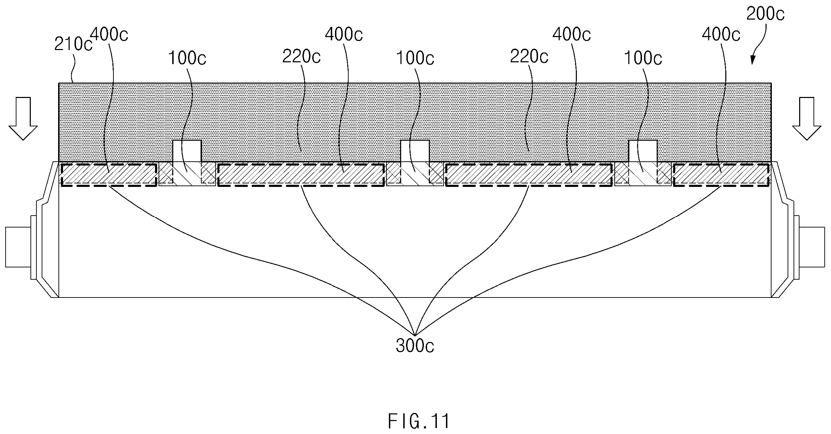

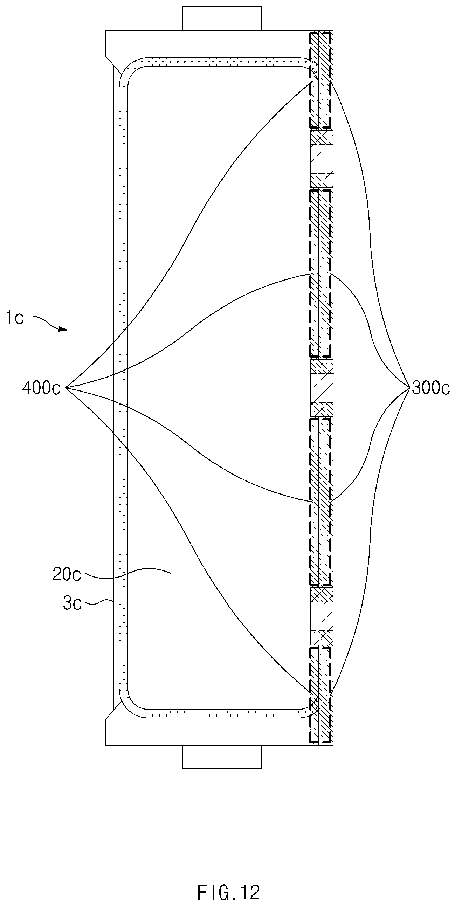

FIG. 11 is a side view illustrating a state in which a non-attachment area 300c of a secondary battery 1c is pressed using a pressing apparatus 200c according to a fourth embodiment of the present invention when viewed in another direction. FIG. 12 is a plan view illustrating a pressing area 400c on which the pressing apparatus 200c presses the secondary battery 1c according to the fourth embodiment of the present invention. The same or similar description as or to the foregoing description may also apply to this embodiment.

As described above, a pressing process including pressing the non-attachment area 300c and at least a portion of an attachment area to which an adhesive member 100c is attached will be described.

A protrusion 220c of the pressing apparatus 200c may protrude to form a pattern provided so that the non-attachment area 300c and a portion of the attachment area to which the adhesive member 100c is attached are at least pressed. For example, the protrusion 220c may protrude to form a pattern as in FIG. 11 so that the entirety of the non-attachment area 300c of an edge 40c is pressed, and an area, which is adjacent to the non-attachment area 300c, of the adhesive member 100c is also pressed. Specifically, the protrusion 220c may protrude to form a pattern provided so as to cover the non-attachment area 300c and a partial area, to which the adhesive member 100c is attached, when viewed from an upper side. The pressing area 400c may be an area including the non-attachment area 300c. As the protrusion 220c presses the pressing area 400c, a difference in thickness between the non-attachment area 300c and the attachment area to which the adhesive member 100c is attached may be minimized.

The pressing apparatus 200c may press the pressing area 400c in a state in which at least the protrusion 220c is heated. When the protrusion 220c performs the pressing in the heated state, the difference in thickness between the non-attachment area 300c and the attachment area to which the adhesive member 100c is attached may be reduced more effectively.

When the protrusion 220c of the pressing apparatus 200c also presses a portion of the adhesive member 100c as described above, the adhesive member 100c may be an adhesive member having a melting point higher than a temperature exceeding room temperature in order to prevent damage to the adhesive member 100c. In other words, the adhesive member 100c may be an adhesive member having a melting point higher than a temperature corresponding to the heated state of the protrusion 220c.

In the secondary battery 1c pressed by the pressing apparatus 200c, the pressing area 400c may be thermo-compressed. For example, the non-attachment area 300c, to which the adhesive member 100c is not attached, of the edge 40c may be at least thermo-compressed, and an area corresponding to the pressing area 400c may be thermo-compressed by being heated and pressed by the protrusion 220c protruding to form a predetermined pattern.

As the pressing area 400c is thermo-compressed through the heating and the pressing, a thickness of the pressing area 400c of the folded edge 40c may correspond to or be less than a thickness of the attachment area to which the adhesive member 100c is attached.

According to the foregoing description, an occurrence of a physical interference caused by the difference in thickness between the areas of the secondary battery 1c may be minimized, and spatial efficiency may be improved when the secondary batteries 1c are stacked.

Although the present invention has been described with reference to the limited embodiments and drawings, the present invention is not limited thereto and may be variously implemented by those of ordinary skill in the art to which the present invention pertains, within the technical idea of the present invention and an equivalent of the appended claims.

### [Description of the Symbols]

1, 1a, 1b, 1c: Secondary battery
2: Electrode assembly
3: Battery case
10: Accommodation part
20: Cup part
30: Degassing part
40: Edge
41: First folding part
42: Second folding part
100, 100a, 100b, 100c: Adhesive member
200, 200a, 200b, 200c: Pressing apparatus
210, 210a, 210b, 210c: Body
220, 220a, 220b, 220c: Protrusion
300, 300a, 300b, 300c: Non-attachment area
400, 400a, 400b, 400c: Pressing area

## Claims

1. A method for manufacturing a secondary battery that comprises an electrode assembly and a battery case configured to accommodate the electrode assembly and having a sealed edge, the method comprising:
a folding process of folding the edge;
an attaching process of attaching an adhesive member to the folded edge; and
a pressing process of pressing at least a partial area of a non-attachment area, to which the adhesive member is not attached, of the edge.

2. The method of claim 1, wherein the attaching process comprises attaching a plurality of adhesive members to the edge so as to be spaced apart from each other, and
the pressing process comprises pressing at least a partial area of the non-attachment area formed between the plurality of adhesive members.

3. The method of claim 1, wherein the pressing process comprises pressing the at least a partial area with a gap from an attachment area to which the adhesive member is attached.

4. The method of claim 1, wherein the pressing process comprises pressing the at least a partial area at a temperature exceeding room temperature.

5. The method of claim 1, wherein the pressing process comprises pressing the non-attachment area and at least a portion of an attachment area to which the adhesive member is attached.

6. The method of claim 5, wherein the pressing process comprises performing the pressing at a temperature exceeding room temperature.

7. The method of claim 6, wherein the attaching process comprises attaching the adhesive member having a melting point higher than the temperature exceeding room temperature.

8. A pressing apparatus for pressing a secondary battery that comprises an electrode assembly and a battery case configured to accommodate the electrode assembly and having a sealed edge, wherein an adhesive member is attached to a partial area of the edge, the pressing apparatus comprising:
a body provided so that a distance from the edge varies; and
a protrusion protruding from the body toward the edge so as to press at least a portion of a remaining area except for the partial area.

9. The pressing apparatus of claim 8, wherein the protrusion is provided to be heated.

10. The pressing apparatus of claim 8, wherein the protrusion protrudes from the body to form a predetermined pattern.

11. A secondary battery comprising:
an electrode assembly;
a battery case configured to accommodate the electrode assembly and having a folded edge; and
an adhesive member attached to a partial area of the folded edge,
wherein at least a partial area of a non-attachment area, to which the adhesive member is not attached, of the edge is pressed.

12. The secondary battery of claim 11, wherein a thickness of the non-attachment area, to which the adhesive member is not attached, of the folded edge corresponds to a thickness of the partial area to which the adhesive member is attached.
